# EUROPEAN PATENT SPECIFICATION

(11) **EP 2 717 605 B1**
(45) Date of publication and mention of the grant of the patent: **16.08.2023**
(21) Application number: 13192588.5
(22) Date of filing: 28.02.2007
(51) Int. Cl.: H04W 16/00, H04W 36/00

(54) **UNAMBIGUOUS IDENTIFICATION OF CELL NEIGHBOURS IN WIRELESS TELECOMMUNICATIONS NETWORKS**
EINDEUTIGE IDENTIFIZIERUNG VON ZELLENNACHBARN IN DRAHTLOSEN TELEKOMMUNIKATIONSNETZWERKEN
IDENTIFICATION NON AMBIGUË DE CELLULES VOISINES DANS DES RESEAUX DE TELECOMMUNICATIONS SANS FIL

(43) Date of publication of application: 09.04.2014
(62) Divisional of application: 07711716.6
(73) Proprietor: Unwired Planet International Limited, Dublin 2 (IE)
(72) Inventor: Moe, Johan, S-590 17 Mantorp (SE); Kallin, Harald, S-192 53 Sollentuna (SE)
(74) Representative: Grünecker Patent- und Rechtsanwälte PartG mbB

(56) References cited:
- WO-A1-02/43430
- WO-A1-99/17571
- ETSI: "ETSI 134 123-1 v.3.0.0.", , 1 June 2002 (2002-06-01), pages 418-478, XP055424213, Retrieved from the Internet: URL:3gppp.com [retrieved on 2017-11-13]
- QUALCOMM EUROPE: "Discovery of neighbour cells in E-UTRAN", 3GPP DRAFT; R2-062303, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Tallinn; 20060823, 23 August 2006 (2006-08-23), XP050131905, [retrieved on 2006-08-23]

## Description

The present invention relates to a method in a wireless telecommunications system and to a wireless telecommunications network.

### BACKGROUND OF THE INVENTION

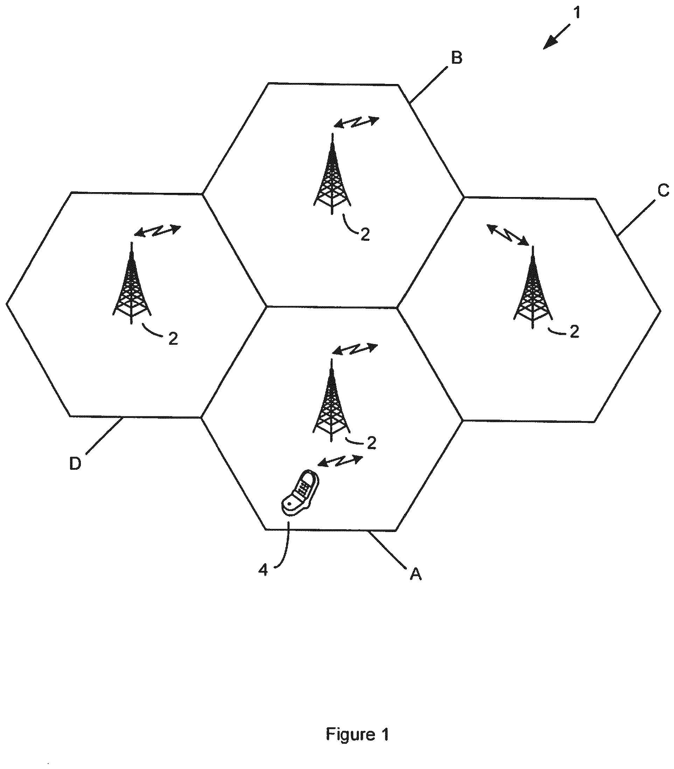

Figure 1 of the accompanying drawings illustrates a wireless telecommunications network, which defines a number of communication cells (A, B, C, D) each of which is served by a radio base station 2. Each communication cell covers a geographical area, and by combining a number of cells a wide area can be covered. A mobile terminal 4 is illustrated communicating in cell A, and is able to move around the system 1.

A base station 2 contains a number of receivers and transmitters to give radio coverage for one or more cells. Each base station 2 is connected to network "backbone", or core network infrastructure (not shown), which enables communications between base stations and other networks. The example system of Figure 1 shows one base station per cell.

An important concept in such a network is the cell and its neighbours. During a call a mobile terminal 4 typically moves around among the cells; moving from one cell to one of its neighbours, repeatedly. A list of the known neighbours, the so called "neighbour cell set", is important both for the network 1 and for the mobile terminal 4 to enable reliable handover between cells. The network 1 can store information relating to a neighbour set for each mobile terminal. The neighbour set is used for evaluation and handover of a mobile terminal from one cell to another as the mobile terminal crosses a cell boundary. It will be readily appreciated that the cell boundaries are not sharply defined, but will in practice be somewhat blurred as the range of the base stations will overlap with one another.

In existing systems, the mobile terminal 4 detect and measure cell operating parameters for neighbouring cells by receiving signals from the neigbourhood. The measured operating parameters are typically a physical layer identifier such as a scramble code which is non uniquely assigned to the cell, signal strength, signal quality and timing information. The mobile terminal measures the operating parameters of each neighbour cell and reports those back to the network 1. When the quality of a neighbour cell is considered better than the current serving cell, a handover from the serving cell to the chosen neighbour cell is executed by the network. The neighbour cell then becomes the serving cell for the mobile terminal.

Typically in a WCDMA (wideband code division multiple access) system, the mobile terminal detects Common Pilot Channel (CPICH) transmissions from surrounding cells, in order to determine id (scamble code) and timing information.

When the mobile reports the neighbour cell signal quality measurements to the network, the cells' respective identities become important. Currently, cell identities (scramble code) are reused for more than one cell. The reuse of identities means that cells may be confused with one other, since the serving cell may have neighbour cells having the same identity information.

Document ETSI TS 134 123-1 v3.0.0 (200-06) titled "Universal Mobile Terminal Communication System (UMTS); User Equipment (UE) conformance specification; Part 1: Protocol conformance specification (3G TS 34.123-1 version 3.0.0 Release 1999)" specifies the protocol conformance testing for the 3rd generation user equipment and is the first part of a multipart test specification. Among many other, this document provides in section 8.4.1.1 a conformance testing for the measurement control and report procedure for intra-frequency measurement for transition from idle mode to CELL_DCH state.

Document WO 02/43430 by Telefonaktiebolaget LM Ericsson titled "BASE STATION IDENTIFICATION" discloses that, in case of interference from other base station transmitting on the same frequency or when neighboring base station use the same identity code, BSIC, another BCCH (b) is transmitted on another time slot so as to make it possible to identify base stations, for example suitable as handover candidates in an urban environments.

Document WO 99/17571 by Telefonaktiebolaget LM Ericsson titled "RADIO SIGNAL SOURCE IDENTIFICATION SYSTEM" discloses either a mobile station or a base station broadcasting a system-unique identity signal from which the network can determine the source of the signal. From the unique source of the signal the network can determine the geographic source from which the signal originated and use that information to perform automatic system administration functions, such as, prepare a best neighbor list or perform frequency planning and allocation for the network.

Since the cells' physical layer identifiers are non-unique, populating and maintaining the neighbour cell sets can never be fully automatic. Human efforts are needed to resolve conflicts where the serving cell has multiple neighbours using the same non-unique identifier.

### SUMMARY OF THE PRESENT INVENTION

The invention is defined by the independent claims. Advantageous embodiments are subjected to the dependent claims. In the following, several embodiments are presented. Embodiments not covered by the claims are to be understood as examples useful for understanding the invention.

The present invention aims to reduce the cost of planning and maintaining neighbour cell sets. It is based on an extra step that is made where mobile terminals are required to make an additional effort to identify uniquely neighbouring cells in the radio network and that the identities are reported from the mobile terminal to the network. Embodiments of the present invention are intended to reduce manual intervention. The method can be implemented as part of an operation support system and base station or only in the RBS. The method is valid for wireless telecommunications technologies such as GSM, WCDMA and LTE.

### BRIEF DESCRIPTION OF THE DRAWINGS

Figure 1 illustrates a cellular wireless telecommunications network;
Figure 2 illustrates a mobile terminal and a base station; and
Figure 3 to 6 illustrate steps in a method embodying one aspect of the present disclosure.

### DETAILED DESCRIPTION OF THE PREFERRED ASPECTS

In order to address the shortcomings of prior solutions, the present disclosure provides a method and architecture for maintaining neighbour cell sets within a mobile cellular network.

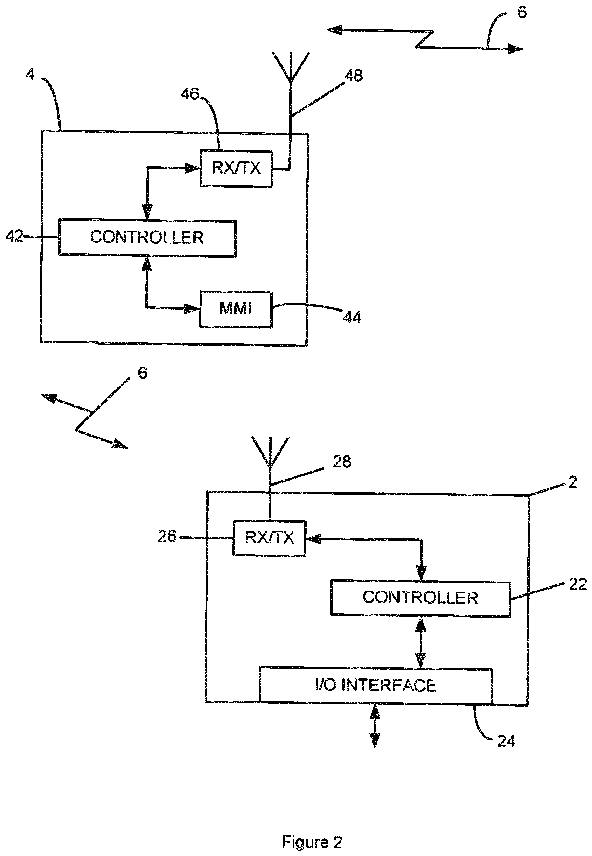

Figure 2 is a schematic diagram showing a mobile terminal 4 and a base station 2 which communicate via an air interface 6. The base station 2 includes a controller 22, input/output (I/O) interface 24, a radio transceiver 26 and an antenna 28. The controller communicates with mobile terminals via the transceiver 26 and antenna 28 over the air interface 6. The controller 22 also communicates with the rest of the telecommunications network via the I/O interface 24.

The mobile terminal 4 comprises a controller 42, a man machine interface (MMI) 44, a radio transceiver 46, and an antenna 48. The controller of the mobile terminal 4 serves to control communications with the base station 2 via the transceiver 46 and antenna 48, over the air interface 6. Interactions with the user of the device take place using the man machine interface 44, which can include a key pad, microphone, loudspeaker and display device, for example. The mobile terminal may also be communication equipment with only a machine-machine interface. These aspects of the base station and mobile terminal are designed to operate in accordance with usual practice.

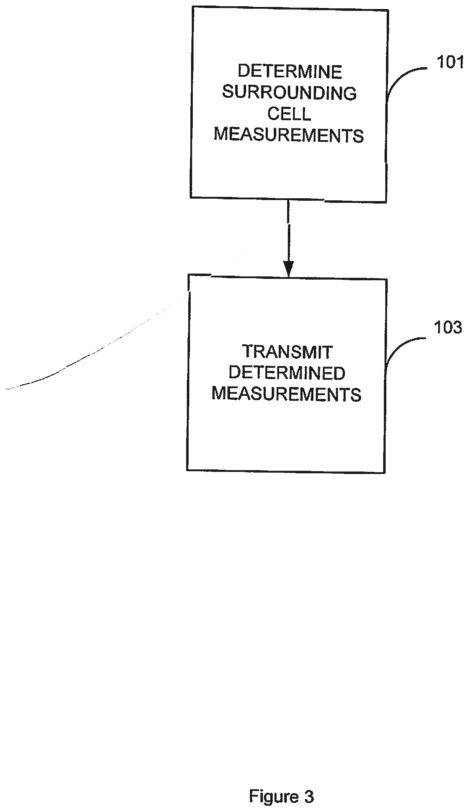

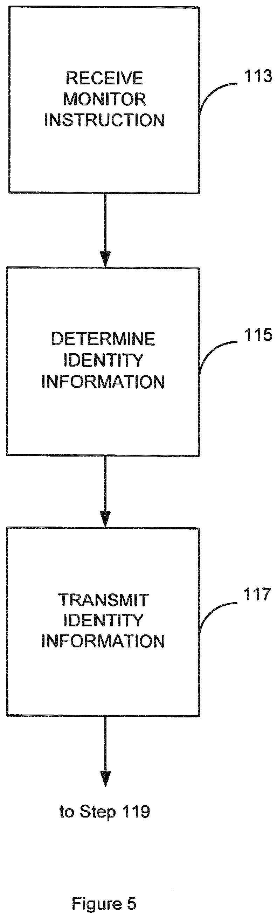

However, base stations 2 and mobile terminals 4 which operate in accordance with the present disclosure are adapted to carry out the method of the disclosure as described below with reference to Figures 3 to 6. It will be appreciated that the various functional units can be provided by the controller, or by other specific units in the devices, or network 1.

A method embodying the present disclosure will now be described with reference to the flowcharts of Figures 3 to 6 as well as Figure 2. Figure 3 illustrates steps to be carried out by the mobile terminal 4. The first step of the method is step 101 in which the mobile terminal 4 determines parameter measurements for surrounding cells. Next, the mobile terminal reports the measurement information to the base station (step 103).

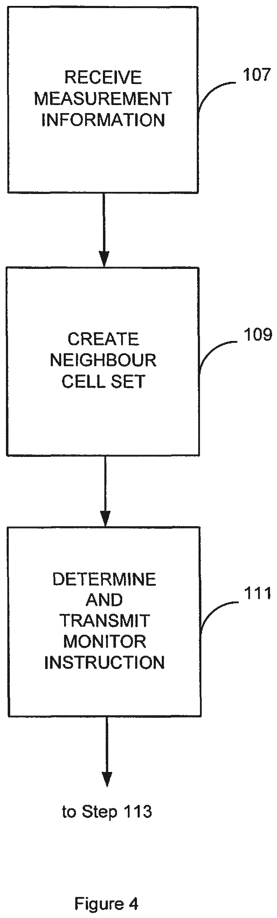

Turning to Figure 4, the base station 2 receives the measurement information from the mobile terminal 4 (step 107), with each measurement information tied to the (non-unique) cell identities that the mobile terminal 4 have detected. If the information from the mobile terminal 4 contains measurements from a cell identity that previously is not a member of the neighbouring cell set, the mobile terminal 4 may be requested to also retrieve the unique cell identity (step 113). The unique cell identity is transmitted from base stations at a much less frequent interval than the physical layer identity. In order to receive and decode this information, the mobile terminal 4 may have to momentarily interrupt its communication with the serving cell. When the unique cell identity has been retrieved (step 115), this information is transmitted to the serving cell (step 117). When the serving cell receives the unique cell identity (step 119) it may now add the newly discovered neighbour cell to its neighbour cell set (step 121) and establish a transport connection to it. It is obvious that the cellular network may want some filtering of the measurement data including several mobile terminals to identify the new neighbour, thereby avoiding adding a distant cell that was detected under exceptional propagation conditions, for example from a mobile terminal 4 located in an aircraft.

The mobile terminal 4, in another example, that does not present a feature of the claimed invention may provide the unique identity information to the base station 2, without the need to receive an instruction to do so from the base station 2.

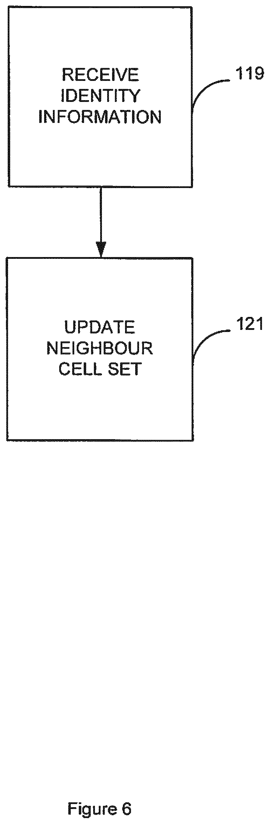

Turning to Figure 6, the base station 2 receives the unique identity information (step 119), and then updates the neighbour cell set. In this way, the neighbour cell set includes unique identity information for those cells which are to be considered as neighbour cells which are candidate cells for handover of the mobile terminal 4.

Making use of unique cell identifiers (UCID) means that there is unambiguous information relating to the identity of the neighbour cells, and so confusion regarding those neighbouring cells is removed. Using the fast and low-resource demanding non-unique cell identity for most of the measurements, facilitates efficient resource usage within mobile terminals 4 and rapid handover to the neighbour cells. The mobile terminal 4 is only requested to retrieve the more cumbersome unique cell identifier when a new neighbour is detected, or when an audit of the relation between the non-unique and unique cell identity seems appropriate.

All cell relations can be continuously evaluated. Inputs to that evaluation are mobile terminal reports and events, network events and operator input. The result of the evaluation is that the cell (or cell relations) will retain different properties. This can also be seen as the cell (relation) being in different states.

The major advantage of aspects of the present disclosure is that it removes the need for manual involvement within the process of maintaining neighbour sets. The operator can decide to fully neglect the concept of neighbours and let the system take care of the neighbour cell definitions.

Cell lookup maps the unique cell identity (UCID) to the address of the realising node of that cell. For example, in LTE, this can be an ordinary DNS, mapping the cell identity to an IP address. The IP address in turn points to the RBS realising the cell.

## Claims

1. A method in a wireless telecommunications system which defines a plurality of communications cells in which a non-unique cell identity and a unique cell identity are transmitted, the method comprising:
communicating from a mobile station to a radio base station which serves a first communications cell;
sending (111), from the radio base station to the mobile station, a request to retrieve a unique cell identity of a second communications cell among the plurality of communications cells;
responsive to receiving the request in the mobile station, retrieving (115) in the mobile station the unique cell identity of the second communications cell; and
reporting (117), from the mobile station to the radio base station, the retrieved unique cell identity of the second communications cell to the radio base station of the first communications cell,
wherein the step of sending the request is preceded by the steps of:
determining (101), in the mobile station, the non-unique cell identity of the second communications cell; and
reporting (103), from the mobile station to the radio base station, the non-unique cell
identity of the second communications cell,
wherein the step of sending the request is performed when the non-unique cell identity of the second communications cell does not provide the base station with unambiguous information relating to the identity of the second cell.

2. A method as claimed in claim 1, wherein:
the step of determining (101) comprises determining, in the mobile station, parameter measurements for the second communications cell, the parameter measurements comprising one or more of a signal strength measurement, a signal quality measurement, and timing information; and
the step of reporting (103) the non-unique cell identity comprises reporting, from the mobile station, the measurement information to the radio base station tied to the non-unique cell identity.

3. A method as claimed in any one of the preceding claims, wherein the second communications cell neighbours the first communications cell.

4. A method as claimed in any one of the preceding claims, further comprising:
establishing, in the radio base station, a transport connection by finding in a lookup map a mapping of the unique cell identity of the second communications cell with a network address of the radio base station that serves the second communications cell.

5. A method as claimed in claim 4, wherein said network address is an IP address.

6. A method as claimed in any one of the preceding claims, further comprising:
adding, in the radio base station, the second communications cell to a neighbour cell list.

7. A wireless telecommunications network which defines a plurality of communications cells, the network comprising network resources and at least one radio base station and one mobile station, comprising respective corresponding means configured to implement the steps of the method of any preceding claim

## Patentansprüche

1. Verfahren in einem Drahtlos-Telekommunikationssystem, das mehrere Kommunikationszellen bildet, in welchem eine nicht-eindeutige Zellenidentität und eine eindeutige Zellenidentität übertragen werden, wobei das Verfahren umfasst:
Ausführen einer Kommunikation von einer Mobilstation zu einer Funkbasisstation, die eine erste Kommunikationszelle versorgt;
Senden (111) einer Anforderung von der Funkbasisstation an die Mobilstation, um eine eindeutige Zellenidentität einer zweiten Kommunikationszelle der mehreren Kommunikationszellen abzurufen;
in Reaktion auf den Empfang der Anforderung in der Mobilstation, Abrufen (115) der eindeutigen Zellenidentität der zweiten Kommunikationszelle in der Mobilstation; und
Berichten (117) der abgerufenen eindeutigen Zellenidentität der zweiten Kommunikationszelle für die Funkbasisstation der ersten Kommunikationszelle von der Mobilstation an die Funkbasisstation,
wobei dem Schritt des Sendens der Anforderung die Schritte vorausgehen:
Ermitteln (101) der nicht-eindeutigen Zellenidentität der zweiten Kommunikationszelle in der Mobilstation; und
Berichten (103) der nicht-eindeutigen Zellenidentität der zweiten Kommunikationszelle von der Mobilstation an die Funkbasisstation,
wobei der Schritt des Sendens der Anforderung ausgeführt wird, wenn eine eindeutige Information in Bezug auf die Identität der zweiten Zelle durch die nicht-eindeutige Zellenidentität der zweiten Kommunikationszelle für die Basisstation nicht bereitgestellt wird.

2. Verfahren nach Anspruch 1, wobei:
der Schritt des Ermittelns (101) umfasst: Ermitteln von Parametermesswerten für die zweite Kommunikationszelle in der Mobilstation, wobei die Parametermesswerte einen Signalstärkenmesswert und/oder einen Signalqualitätsmesswert und/oder eine Zeitsteuerinformation enthalten; und
der Schritt des Berichtens (103) der nicht-eindeutigen Zellenidentität umfasst:
Berichten der Messwertinformation, die mit der nicht-eindeutigen Zellenidentität verknüpft ist, von der Mobilstation an die Funkbasisstation.

3. Verfahren nach einem der vorhergehenden Ansprüche, wobei die zweite Kommunikationszelle benachbart zu der ersten Kommunikationszelle liegt.

4. Verfahren nach einem der vorhergehenden Ansprüche, das ferner umfasst:
Einrichten einer Transportverbindung in der Funkbasisstation durch Auffinden einer Zuordnung der eindeutigen Zellenidentität der zweiten Kommunikationszelle zu einer Netzwerkadresse der Funkbasisstation, die die zweite Kommunikationszelle versorgt, in einer Nachschlag-Karte.

5. Verfahren nach Anspruch 4, wobei die Netzwerkadresse eine IP-Adresse ist.

6. Verfahren nach einem der vorhergehenden Ansprüche, das ferner umfasst: Hinzufügen der zweiten Kommunikationszelle zu einer Nachbarzellenliste in der Funkbasisstation.

7. Drahtlos-Telekommunikationsnetzwerk, das mehrere Kommunikationszellen bildet, wobei das Netzwerk Netzwerkressourcen und mindestens eine Funkbasisstation und eine Mobilstation umfasst, und mit entsprechenden Mitteln, die ausgebildet sind, die entsprechenden Schritte des Verfahrens eines der vorhergehenden Ansprüche einzurichten.

## Revendications

1. Procédé dans un système de télécommunications sans fil qui définit une pluralité de cellules de communication dans lesquelles une identité de cellule non unique et une identité de cellule unique sont transmises, le procédé comprenant :
une communication d'une station mobile à une station de base radio qui sert une première cellule de communication ;
un envoi (111), de la station de base radio à la station mobile, d'une demande de récupérer une identité de cellule unique d'une deuxième cellule de communication parmi la pluralité de cellules de communication ;
en réaction à une réception de la demande dans la station mobile, une récupération (115) dans la station mobile de l'identité de cellule unique de la deuxième cellule de communication ; et
un rapport (117), de la station mobile à la station de base radio, de l'identité de cellule unique récupérée de la deuxième cellule de communication à la station de base radio de la première cellule de communication,
dans lequel l'étape d'envoi de la demande est précédée par les étapes de :
une détermination (101), dans la station mobile, de l'identité de cellule non unique de la deuxième cellule de communication ; et
un rapport (103), de la station mobile à la station de base radio, de l'identité de cellule non unique de la deuxième cellule de communication,
dans lequel l'étape d'envoi de la demande est effectuée lorsque l'identité de cellule non unique de la deuxième cellule de communication ne fournit pas à la station de base des informations non ambigües relatives à l'identité de la deuxième cellule.

2. Le procédé tel que revendiqué à la revendication 1, dans lequel :
l'étape de détermination(101) comprend
une détermination, dans la station mobile, de mesures de paramètre pour la deuxième cellule de communication, les mesures de paramètre comprenant une ou plusieurs d'une mesure de force de signal, d'une mesure de qualité de signal et d'informations de minutage ; et
l'étape de rapport (103) de l'identité de cellule non unique comprend un rapport, de la station mobile, des informations de mesure à la station de base radio liée à l'identité de cellule non unique.

3. Le procédé tel que revendiqué à l'une quelconque des revendications précédentes, dans lequel la deuxième cellule de communication est voisine de la première cellule de communication.

4. Le procédé tel que revendiqué à l'une quelconque des revendications précédentes, comprenant en outre :
un établissement, dans la station de base radio, d'une connexion de transport en recherchant dans une carte de consultation un mappage de l'identité de cellule unique de la deuxième cellule de communication avec une adresse de réseau de la station de base radio qui sert la deuxième cellule de communication.

5. Le procédé tel que revendiqué à la revendication 4, dans lequel ladite adresse de réseau est une adresse IP.

6. Le procédé tel que revendiqué à l'une quelconque des revendications précédentes, comprenant en outre :
un ajout, dans la station de base radio, de la deuxième cellule de communication à une liste de cellules voisines.

7. Réseau de télécommunications sans fil qui définit une pluralité de cellules de communication,
le réseau comprenant des ressources de réseau et au moins une station de base radio et une station mobile, comprenant des moyens respectifs configurés pour mettre en œuvre les étapes correspondantes du procédé de l'une quelconque des revendications précédentes.
